# EUROPÄISCHE PATENTSCHRIFT

(11) **EP 2 084 462 B1**
(45) Veröffentlichungstag und Bekanntmachung des Hinweises auf die Patenterteilung: **13.01.2010**
(21) Anmeldenummer: 07819537.7
(22) Anmeldetag: 02.11.2007
(51) Int. Cl.: F24D 3/16

(54) **DECKENELEMENT FÜR EINE HEIZ-/KÜHLDECKE, HEIZ-/KÜHLDECKE MIT MINDESTENS EINEM DERARTIGEN DECKENELEMENT SOWIE VERFAHREN ZUR HERSTELLUNG MINDESTENS ZWEIER DECKENMODULE AUS EINEM DERARTIGEN DECKENELEMENT**
CEILING/FLOOR ELEMENT FOR A HEATING/COOLING CEILING/FLOOR, HEATING/COOLING CEILING/FLOOR WITH AT LEAST ONE SUCH CEILING/FLOOR ELEMENT, AND METHOD OF PRODUCING AT LEAST TWO CEILING/FLOOR MODULES FROM SUCH A CEILING/FLOOR ELEMENT
ÉLÉMENT DE PLAFOND POUR PLAFOND CHAUFFANT ET/OU REFROIDISSANT, PLAFOND CHAUFFANT ET/OU REFROIDISSANT DOTÉ D'AU MOINS UN TEL ÉLÉMENT DE PLAFOND ET PROCÉDÉ DE FABRICATION D'AU MOINS DEUX MODULES DE PLAFOND CONSTITUÉS D'UN TEL ÉLÉMENT DE PLAFOND

(30) Priorität: 06.11.2006 DE 102006052559
(43) Veröffentlichungstag der Anmeldung: 05.08.2009
(73) Patentinhaber: Rehau Ag + Co, 95111 Rehau (DE)
(72) Erfinder: KRÖBER, Carsten, 90765 Fürth (DE); KOCH, Klaus, Paul, 90513 Zirndorf (DE)
(86) Internationale Anmeldenummer: PCT/EP2007/009510
(87) Internationale Veröffentlichungsnummer: WO 2008/055624

(56) Entgegenhaltungen:
- EP-A- 1 004 827
- EP-A- 1 703 215
- WO-A-2004/038121
- DE-U1- 20 011 751
- JP-A- 10 096 522

## Beschreibung

Die Erfindung betrifft ein Deckenelement für eine Heiz-/Kühldecke zum Kühlen von Räumen nach dem Oberbegriff des Anspruchs 1. Ferner betrifft die Erfindung eine Heiz-/Kühldecke mit mindestens einem derartigen Deckenelement sowie ein Verfahren zur Herstellung mindestens zweier Deckenmodule aus einem derartigen Deckenelement.

Ein in einzelne Deckenmodule unterteilbares Deckenelement für eine Kühldecke zum Kühlen von Räumen ist bekannt aus der EP 1 004 827 B1. Diese bekannten Deckenelemente müssen insbesondere beim Lagern vorsichtig gehandhabt werden, da die dortigen Kühlfluidverbindungsabschnitte relativ empfindliche Bauteile darstellen.

Es ist daher eine Aufgabe der vorliegenden Erfindung, ein Deckenelement der eingangs genannten Art derart weiterzubilden, dass es einfacher gehandhabt, insbesondere mit geringerem Aufwand transportiert und gelagert werden kann.

Diese Aufgabe ist erfindungsgemäß gelöst durch ein Deckenelement mit den im Kennzeichnungsteil des Anspruchs 1 angegebenen Merkmalen.

Erfindungsgemäß wurde erkannt, dass die Handhabung und die Lagerung des Deckenelements verbessert wird, wenn die Kühlfluidverbindungsabschnitte bei noch nicht in Deckenmodule getrenntem Deckenelement innerhalb der Kontur des Deckenelements angeordnet sind, also seitlich nicht über dieses überstehen. Hierdurch ist verhindert, dass die Kühlfluidverbindungsabschnitte bei der Handhabung oder beim Lagern beschädigt werden. Die Kühlfluidverbindungsabschnitte sind in den Aussparungen bzw. Ausnehmungen geschützt und zum Trennen des Deckenelements in Deckenmodule gut zugänglich.

Aussparungen nach Anspruch 2 bieten eine besonders gute Zugänglichkeit der Kühlfluidverbindungsabschnitte zum Trennen des Deckenelements in Deckenmodule.

Zudem können nach dem Trennen entstehende Modulanbindungsleitungsabschnitte über eine relativ große Länge aus den Aussparungen herausgezogen bzw. -gebogen werden, was die Anbindung dieser Leitungsabschnitte an Versorgungsleitungen vereinfacht. Vorzugsweise sind die Aussparungen, gesehen von der der Dämmschicht gegenüberliegenden Seite des Deckenelements her, abgedeckt. Derartige Aussparungen gewährleisten, dass die randseitige Gesamtkontur des Deckenelements vollständig von der Trägerschicht gebildet wird und nicht teilweise von der Dämmschicht. Auch dies bringt Vorteile bei der Handhabung und bei der Lagerung des Deckenelements, da die Trägerschicht randseitig auf das Deckenelemente drückende Stoßkräfte stets aufnehmen kann, was zum Schutz der in der Regel empfindlicheren Dämmschicht beiträgt.

Erweiterungen nach Anspruch 3 gewährleisten, dass die Kühlfluidverbindungsabschnitte von der Nutenseite der Trägerschicht her einfach zugänglich sind.

Stege nach Anspruch 4 erhöhen die Stabilität der Trägerschicht im Bereich der Aussparungen.

Nach Anspruch 5 geführte Anbindungsleitungsabschnitte sind unempfindlich, was Handhabung und Lagerung angeht. Hier gilt entsprechend, was vorstehend zu den erfindungsgemäßen Kühlfluidverbindungsabschnitten ausgeführt wurde. Die Anbindungsabschnitte nach Anspruch 5 treten im montierten Zustand des Deckenelements nach oben aus. Dies erleichtert die Anbindung an die Versorgungsleitung.

Eine Führung mindestens eines Anbindungsleitungsabschnitts nach Anspruch 6 erfordert einen geringen Herstellungsaufwand, da sich eine Durchführung durch einen Dämmfüllabschnitt in der Regel leicht herstellen lässt.

Ein Kunststoffschlauch nach Anspruch 7 ist leicht, alterungsbeständig und lässt sich im Vergleich zu einem Metallrohr einfach verarbeiten. Bevorzugt wird der Einsatz eines Kunststoffschlauches aus vernetztem Polyethylen (PE-Xa).

Innendurchmesser des Leitungselements nach Anspruch 8 vereinfachen die Versorgung des Deckenelements. Wenn das Deckenelement nicht in Deckenmodule unterteilt ist, reicht es aus, das Deckenelement über genau einen Zuführanbindungsleitungsabschnitt zu versorgen.

Die Vorteile einer Heiz-/Kühldecke nach Anspruch 9 sowie eines Verfahrens zur Herstellung mindestens zweier Deckenmodule nach Anspruch 10 entsprechen denjenigen, die vorstehend unter Bezugnahme auf das erfindungsgemäße Deckenelement bereits ausgeführt wurden.

Ausführungsbeispiele der Erfindung werden nachfolgend anhand der Zeichnung näher erläutert. In dieser zeigen:
- Fig. 1: von einer Raumdecke her gesehen eine Aufsicht auf ein Deckenelement für eine Heiz-/Kühldecke zum Kühlen von Räumen;
- Fig. 2: eine Seitenansicht eines Ausschnitts des Deckenelements aus Blickrichtung II in Fig. 1;
- Fig. 3: eine Ansicht einer Heiz-/Kühldecke mit einem Deckenelement nach Fig. 1, vom Raumboden her gesehen;
- Fig. 4: einen Schnitt gemäß Linie IV-IV in Fig. 3;
- Fig. 4A: von einer Raumdecke her gesehen eine Aufsicht auf eine Trägerschicht einer weiteren Ausführungsform eines Deckenelements im Bereich eines Kühlfluid- verbindungsabschnitts; und
- Fig. 4B: einen Schnitt gemäß Linie IV B - IV B in Fig. 4A.

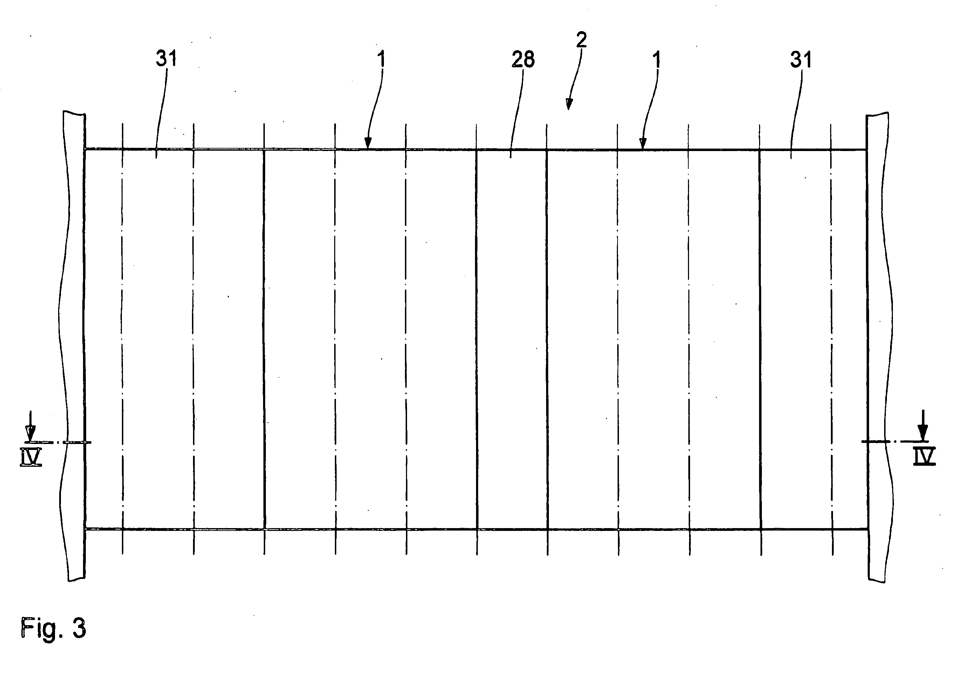

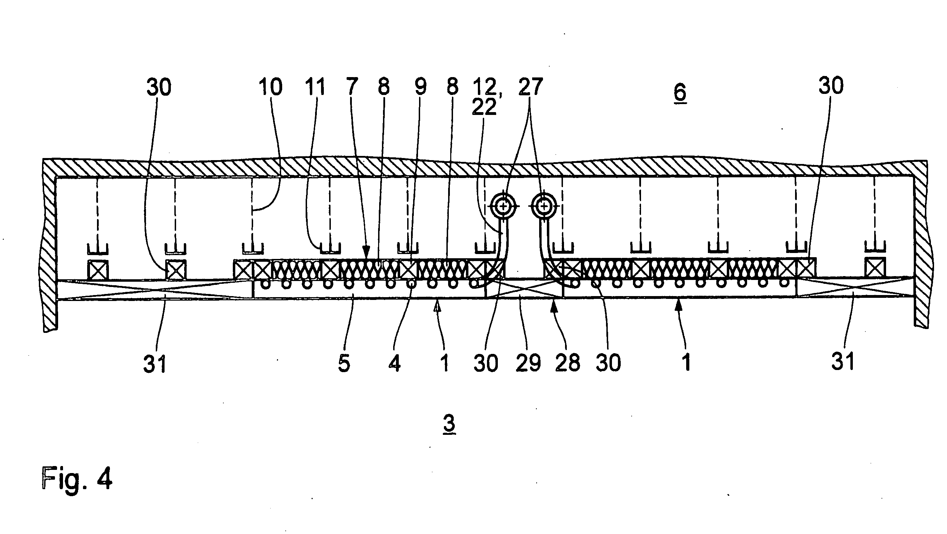

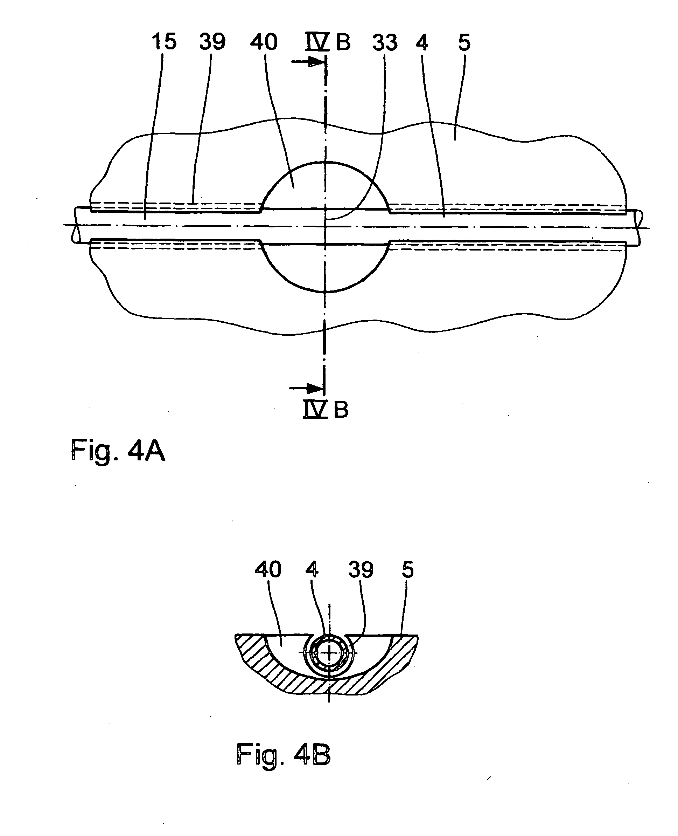

Ein Deckenelement 1 dient zum Aufbau einer Heiz-/Kühldecke 2, für die in den Fig. 3 und 4 ein Aufbaubeispiel angegeben ist. Die Heiz-/Kühldecke 2 dient zum Kühlen eines unterhalb der Heiz-/Kühldecke 2 angeordneten Raums 3 (vgl. Fig. 4).

Das Deckenelement 1 ist rechteckig und hat eine Länge von 2,0 m und eine Breite von 1,2 m. Das Deckenelement 1 hat ein Leitungselement 4 zur Aufnahme eines Kühlfluids, z. B. zur Leitung von Kühlwasser. Beim Leitungselement 4 handelt es sich um ein Kunststoffrohr aus vernetztem Polyethylen (PE-Xa).

Das Leitungselement 4 hat einen Außendurchmesser von 10,1 mm und eine Wandstärke von 1,1 mm. Auch ein Kunststoffrohr mit einem geringen Außendurchmesser kann beim Leitungselement 4 zum Einsatz kommen.

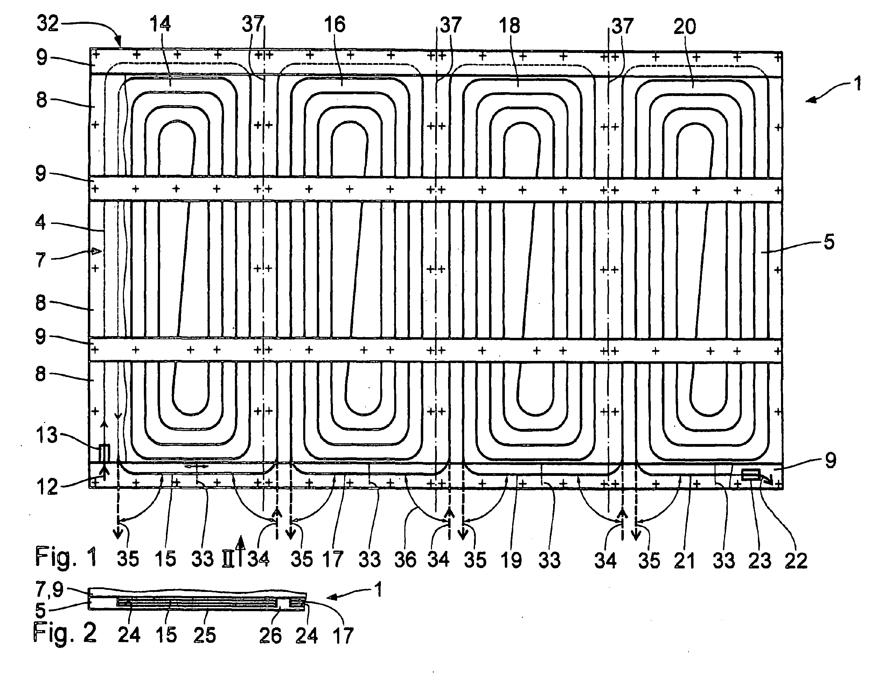

Das Deckenelement 1 ist mehrschichtig aufgebaut. Eine Trägerschicht 5, die im verbauten Zustand des Deckenelements 1 dem Rauminneren zugewandt ist, dient der Aufnahme des Leitungselements 4. Das Leitungselement 4 ist dabei in einer Ω-förmigen Nut der Trägerschicht 5 eingelegt, wobei die Nut den Verlauf des Leitungselements 4 vorgibt. Die Trägerschicht 5 ist als Gipskartonplatte ausgeführt. Im montierten Zustand des Deckenelements 1 einer Raumdecke 6 (vgl. Fig. 4) zugewandt ist eine Dämmschicht 7 des Deckenelements 1. Die Dämmschicht 7 dient zur wärmedämmenden Abdeckung der Trägerschicht 5 mit dem Leitungselement 4. Die Dämmschicht 7 ist unterteilt in Dämmfüllabschnitte 8 und in Dämmtragabschnitte 9. In der Fig. 1 sind die Dämmfüllabschnitte 8, die zwischen den Dämmtragabschnitten 9 liegen, gebrochen jeweils nur in einem linken Abschnitt dargestellt. Dort, wo das Leitungselement 4 von den dargestellten Abschnitten der Dämmfüllabschnitte 8 und dem in der Fig. 1 oberen Dämmfragabschnitt 9 verdeckt werden, ist das Leitungselement 4 in der Fig. 1 gestrichelt dargestellt. Das Deckenelement 1 hat insgesamt drei Dämmfüllabschnitte 8 und vier Dämmfragabschnitte 9. Bei den Dämmfüllabschnitten 8 handelt es sich um Polystyrol-(PS)-Dämmstreifen. Auch andere Materialien für die Dämmfüllabschnitte 8 sind möglich, z. B. PUR-Stein/Steinwolle (PUR steht für Polyurethan), PU oder Mineralwolle. Bei den Dämmfüllabschnitten 8 kann auch eine Vakuumdämmung zum Einsatz kommen. Bei den Dämmtragabschnitten 9 handelt es sich um Tragleisten in Form von Gipskartonstreifen. Die Dämmtragabschnitte 9 können auch aus harten und nicht komprimierbaren Dämmstoffen, wie z. B. PUR-Stein, gebildet sein. Die Streifen 8, 9 verlaufen abwechselnd in der Abfolge Tragabschnitt 9, Füllabschnitt 8, Tragabschnitt 9, Füllabschnitt 8, Tragabschnitt 9, Füllabschnitt 8 und Tragabschnitt 9 längs der Längsseite des Deckenelements. Die in dieser Weise in insgesamt sieben Streifen unterteilte Dämmschicht 7 bedeckt die Trägerschicht 5 vollständig. In der Fig. 1 ist der in der dortigen Ansicht untere Dämmtragabschnitt 9 nur teilweise dargestellt, um noch zu beschreibende Montageschritte zu verdeutlichen.

Das Deckenelement 1 hat eine Gesamtstärke von 33 mm, wovon auf die Dämmschicht 7 15 mm entfallen. Die Ω-Nut hat eine maximale Frästiefe von etwa 11 mm.

Die Gipskartonstreifen 9 sind im Querschnitt rechteckig und haben senkrecht zur Leistenerstreckung eine Querschnittsfläche von 60 mm (gemessen parallel zur Ebene des Deckenelements 1) x 15 mm (gemessen senkrecht zur Ebene des Deckenelements 1). Auch andere Kantenlängen des Querschnitts der Gipskartonstreifen 9 zwischen 10 und 150 mm sind möglich. Insbesondere können die Gipskartonstreifen 9 auch einen quadratischen Querschnitt aufweisen. Bei einer nicht dargestellten Variante des Deckenelements 1 können die Dämmfüllabschnitte 8 auch stärker sein als die Dämmtragabschnitte 9.

Die Dämmfüllabschnitte 8 und die Dämmtragabschnitte 9 sind mit der Trägerschicht 5 verklebt. Die Schichtstärke der Dämmfüllabschnitte 8 senkrecht zur Flächenerstreckung des Deckenelements 1 entspricht der Schichtstärke der Dämmtragabschnitte 9.

Die Dämmtragabschnitte 9 stellen Dämmtragleisten dar, über die das Deckenelement 1 mit einer raumdeckenseitigen und längs der Dämmtragabschnitte 9 verlaufenden Metalltragstruktur 10 verbunden sind. Die Tragstruktur 10 umfasst eine Mehrzahl von metallischen Tragleisten 11, die längs der Dämmtragabschnitte 9 angeordnet sind.

Das Leitungselement 4 hat einen Zuführanbindungsleitungsabschnitt 12, der in montiertem Zustand des Deckenelements 1 von der Raumdeckenseite her durch eine Durchtrittsöffnung 13 (vgl. Fig. 1) durch den in der Fig. 1 untersten Dämmfüllabschnitt 8 hindurch und in die Ω-Nut in der Trägerschicht 5 eingeführt ist. Anschließend hat das Leitungselement 4 in einem ersten und in der Fig. 1 linken Flächenabschnitt 14 einen mäanderförmigen Verlauf. Der Flächenabschnitt 14 ist rechteckig und erstreckt sich über die gesamte Breite des Deckenelements 1 sowie über ein Viertel der Länge des Deckenelements 1. Der erste Flächenabschnitt 14 hat also Abmessungen von 1200 mm x 500 mm. Insgesamt ist das Deckenelement 1 in vier derartige, gleich große Flächenabschnitte unterteilt.

Über einen ersten Kühlfluidverbindungsabschnitt 15 des Leitungselements 4 ist der erste Flächenabschnitt 14 mit einem diesen rechts benachbarten zweiten Flächenabschnitt 16 verbunden. Auch im zweiten Flächenabschnitt 16 verläuft das Leitungselement 4 wie im ersten Flächenabschnitt 14 mäanderförmig und tritt über einen zweiten Kühlfluidverbindungsabschnitt 17 in einen dritten Flächenabschnitt 18 der Trägerschicht 5 und über einen dritten Kühlfluidverbindungsabschnitt 19 in einen vierten Flächenabschnitt 20 der Trägerschicht 5 ein. Die vier Flächenabschnitte 14, 16, 18, 20 sind alle gleich groß und erstrecken sich alle über die gesamte Breite des Deckenelements 1.

In allen vier Flächenabschnitten 14, 16, 18, 20 hat das Leitungselement 4 den gleichen mäanderförmigen Verlauf. Über einen vierten Kühlfluidverbindungsabschnitt 21 ist das aus dem vierten Flächenabschnitt 20 austretende Leitungselement 4 mit einem Abführanbindungsleitungsabschnitt 22 verbunden. Letzterer durchtritt den an dieser Stelle abschnittsweise in der Fig. 1 zu unterst dargestellten Dämmtragabschnitt 9 durch eine weitere Durchtrittsöffnung 23.

Alle vier Kühlfluidverbindungsabschnitte 15, 17, 19, 21 verlaufen randseitig längs des in der Fig. 1 unten liegenden und dort nur auf Höhe eines ganz rechts gelegenen Abschnitts dargestellten Dämmtragabschnitts 9. Die Kühlfluidverbindungsabschnitte 15, 17, 19, 21 verlaufen also am Rand des Deckenelements 1. Die Kühlfluidverbindungsabschnitte 15, 17, 19, 21 stehen nicht seitlich über das Deckenelement 1 über, wie in der Ansicht der Fig. 1 deutlich wird, die zeigt, dass die Kühlfluidverbindungsabschnitte 15, 17, 19, 21 innerhalb der Erstreckung der Trägerschicht 5 laufen. Auch die Anbindungsleitungselemente 12, 22 stehen nicht seitlich über das Deckenelement 1 über.

Die Kühlfluidverbindungsabschnitte 15, 17, 19, 21 verlaufen in Aussparungen 24 der Trägerschicht 5, so dass sie von der in der Fig. 1 unten liegenden Längskante des Deckenelements 1 her zugänglich sind. Über die Aussparungen 24 sind die Kühlfluidverbindungsabschnitte 15, 17, 19, 21 also vom Rand des Deckenelements 1 her zugänglich. Die Aussparungen 24 erstrecken sich dabei praktisch über die gesamte Breite des Flächenabschnitts 14, 16, 18, 20, dem der jeweilige Kühlfluidverbindungsabschnitt 15, 17, 19, 21 zugeordnet ist. Die Aussparungen 24 sind, gesehen von der der Dämmschicht 7 gegenüberliegenden Seite des Deckenelements 1 her, also gesehen von der Rauminnenseite her, von einer Trägerrestschicht 25 abgedeckt. Zwischen den Aussparungen 24 liegen nicht ausgesparte Stege 26 der Trägerschicht 5. Trotz der Aussparungen 24 hat die Trägerschicht 5 daher auch im Bereich der Aussparungen 24 eine ausreichend hohe Tragstabilität.

Über die Anbindungsleitungsabschnitte 12, 22 ist das Leitungselement 4 mit einer zentralen Versorgungsleitung 27 verbunden. Die Versorgungsleitungen 27 verlaufen zwischen der Raumdecke 6 und einer Füllplatte 28, die zwischen zwei Deckenelementen 1 der Heiz-/Kühldecke 2 auf Höhe der Deckenelemente 1 angebracht ist (vgl. Fig. 3 und 4). Die Füllplatte 28 hat eine Breite von 400 mm und eine Länge von 2,0 m. Die Füllplatte 28 hat eine Trägerschicht 29 in Form einer Gipskartonplatte, die mit den Trägerschichten 5 der benachbarten Deckenelemente 1 fluchtet und die gleiche Stärke wie diese hat.

Auf die Trägerschicht 29 aufgeklebt sind Tragabschnitte 30 in Form zweier Gipskartonstreifen nach Art der Dämmtragabschnitte 9. Die Füllplatte 28 weist zwei randseitige Tragabschnitte 30 auf. Über die Tragabschnitte 30 ist die Füllplatte 28 mit den Tragleisten 11, längs derer die Tragabschnitte 30 verlaufen, der Tragstruktur 10 verbunden.

Wandseitig ist die Heiz-/Kühldecke 2 jeweils abgeschlossen durch Blindplatten 31, deren Aufbau dem der Füllplatten 28 entspricht. Die Blindplatten 31 haben beim in den Fig. 3 und 4 dargestellten Aufbaubeispiel der Heiz-/Kühldecke 2 Breiten von 1000 mm (links) und 600 mm (rechts). Die Blindplatten 31 haben ebenfalls eine Länge von 2,0 m. Im Abstand von je 400 mm haben die Blindplatten 31 Tragabschnitte 30 in Form von Gipskartonstreifen. Die in den Fig. 3 und 4 linke Blindplatte 31 hat drei Gipskartonstreifen 30 und die in den Fig. 3 und 4 rechte Blindplatte 31 hat zwei Gipskartonstreifen 30. Alle Gipskartonstreifen 9 bzw. 30 sind auf Höhe der im Abstand von je 400 mm parallel zueinander verlaufenden Tragleisten 11 der Tragstruktur 10 angeordnet.

Bei der Herstellung des Deckenelements 1 wird zunächst die Ω-Nut zur Aufnahme des Leitungselements 4 in die Trägerschicht 5 eingefräst. In der Trägerschicht 5 werden Vorbohrungen zur späteren Montage des Deckenelements 1 an den Tragleisten 11 hergestellt. Die Vorbohrungen werden in der Trägerschicht 5 dort vorgenommen, wo später die Dämmtragabschnitte 9 auf der Trägerschicht 5 zu liegen kommen. Nun wird das Leitungselement 4 in die vorgefräste Ω-Nut eingelegt. Das Kunststoffrohr kann hierzu, damit es sich beim Einlegen in die mäanderförmigen Flächenabschnitte 14, 16, 18, 20 leicht deformieren lässt, in einem Wasserbad vorgewärmt werden. Nach dem Einlegen des Leitungselements 4 wird durch eine Prüfung sichergestellt, dass das Leitungselement 4 nicht nach oben über die Trägerschicht 5 übersteht. Im Bereich der später aufzusetzenden Dämmfüllabschnitte 8 wird dann die rohrseitige Oberseite der Trägerschicht 5 mit Klebstoff eingestrichen. Im Bereich der Dämmtragabschnitte 9 wird der Klebstoff nur punktuell aufgetragen, um ein späteres Abnehmen aufgeklebter Dämmtragabschnitte 9 zu ermöglichen. Nun werden, in der Fig. 1 von oben nach unten, abwechselnd die Dämmtragabschnitte 9 und die Dämmfüllabschnitte 8 auf die Trägerschicht 5 aufgeklebt. Im in der Fig. 1 untersten Dämmfüllabschnitt 8 wird vor dem Aufkleben noch die Durchtrittsöffnung 13 eingebracht und in den in der Fig. 1 untersten Dämmtragabschnitt 9 die Durchtrittsöffnung 23. Die Anbindungsleitungsabschnitte 12 und 22 werden beim Aufbringen des letzten Dämmfüllabschnitts 8 und des letzten Dämmtragabschnitts 9 durch diese Abschnitte durch die Durchtrittsöffnungen 13 bzw. 23 hindurchgeführt.

Die Dämmfüllabschnitte 8 und die Dämmtragabschnitte 9 werden so lange auf die Trägerschicht 5 aufgepresst, bis der Klebstoff ausgehärtet ist. Anschließend erfolgt eine Druckluftdruckprobe zur Überprüfung der Unversehrtheit und Dichtigkeit des Leitungselements 4 bzw. -kreises. Diese Druckprobe kann auch mit Wasser durchgeführt werden.

Je nach dem Aufbau der Heiz-/Kühldecke 2 kann diese aus vollständigen Deckenelementen 1 oder auch aus lediglich einzelne Flächenabschnitte 14, 16, 18, 20 aufweisenden Deckenmodulen 32 gefertigt sein. Nachfolgend wird anhand der Fig. 1 die Unterteilung des dort dargestellten Deckenelements 1 in vier Deckenmodule 32 erläutert. Hierzu wird zunächst der in der Fig. 1 unterste Dämmtragabschnitt 9 abgenommen, wobei die punktuelle Verklebung dieses Dämmtragabschnitts 9 mit der Trägerschicht 5 gelöst wird. Anschließend werden die Kühlfluidverbindungsabschnitte 15, 17, 19, 21 aus Ω-Nutabschnitten herausgehoben, soweit die Kühlfluidverbindungsabschnitte 15, 17, 19, 21 in derartigen Nutabschnitten eingesetzt sind. Diese Zugänglichkeit der Kühlfluidverbindungsabschnitte 15, 17, 19, 21 ist über die Aussparungen 24 gegeben. Die Kühlfluidverbindungsabschnitte 15, 17, 19, 21 werden sodann etwa mittig an Trennpositionen 33, z. B. mit einem scharfen Messer, durchtrennt. Die durch das Trennen der Kühlfluidverbindungsabschnitte 15, 17, 19, 21 sich ergebenden Leitungselementabschnitte stellen Zuführanbindungsleitungsabschnitte 34 bzw. Abführanbindungsleitungsabschnitte 35 der Deckenmodule 32 dar, die anschließend, wie in der Fig. 1 durch Bewegungspfeile 36 angedeutet, in der Fig. 1 jeweils um 90° nach unten aus dem Deckenelement 1 herausgebogen werden.

Der in der Fig. 1 linke Teilabschnitt des ersten Kühlfluidverbindungsabschnitts 15 stellt den Abführanbindungsleitungsabschnitt 35 des Deckenmoduls 32 zum ersten Flächenabschnitt 14 dar. Der rechte Teilabschnitt des durchtrennten ersten Kühlfluidverbindungsabschnitts 15 stellt den Zuführanbindungsleitungsabschnitt 34 des zum zweiten Flächenabschnitt 16 gehörenden Deckenmoduls 32 dar. Der in der Fig. 1 linke Teilabschnitt des zweiten Kühlfluidverbindungsabschnitts 17 stellt den Abführanbindungsleitungsabschnitt 35 des zum zweiten Flächenabschnitt 16 gehörenden Deckenmoduls 32 dar. Der in der Fig. 1 rechte Teilabschnitt des zweiten Kühlfluidverbindungsabschnitts 17 stellt den Zuführanbindungsleitungsabschnitt 34 des zum dritten Flächenabschnitt 18 gehörenden Deckenmoduls 32 dar. Der in der Fig. 1 linke Teilabschnitt des durchtrennten dritten Kühlfluidverbindungsabschnitts 19 stellt den Abführanbindungsleitungsabschnitt 35 des zum dritten Flächenabschnitt 18 gehörenden Deckenmoduls 32 dar.

Der in der Fig. 1 rechte Teilabschnitt des durchtrennten Kühlfluidverbindungsabschnitts 19 stellt den Zuführanbindungsleitungsabschnitt 34 des zum vierten Flächenabschnitt 20 gehörenden Deckenmoduls 32 dar. Der in der Fig. 1 linke Teilabschnitt des vierten Kühlfluidverbindungsabschnitts 21 stellt den Abführanbindungsleitungsabschnitt 35 des zum vierten Flächenabschnitt 20 gehörenden Deckenmoduls 32 dar. Der in der Fig. 1 rechte Teilabschnitt des vierten Kühlfluidverbindungsabschnitts 21 ist funktionslos.

Durch das 90°-Herausdrehen der Anbindungs-Leitungsabschnitte 34, 35 ist nun gewährleistet, dass die Abschnitte des Leitungselements 4 einer Trennung des Deckenelements 1 in vier Deckenmodule 32 nicht im Wege stehen. Diese Trennung kann dann längs dreier durch Trennlinien 37 vorgegebener Trennbereiche erfolgen. Es liegen dann insgesamt vier Deckenmodule 32 mit Abmessungen der Trägerschicht 5 von 500 mm x 1200 mm vor. Die Deckenmodule 32 können dann über die Anbindungsleitungsabschnitte 12, 34, 35 an die Versorgungsleitungen 27 der Heiz-/Kühldecke 2 angeschlossen werden.

Neben einer Unterteilung in vier Deckenmodule 32, wie vorstehend erläutert, kann das Deckenelement 1 natürlich auch anders in Deckenmodule 32 aufgeteilt werden. Beispiele für derartige Aufteilungen sind 1 : 3, 2 : 2, 1 : 1 : 2, wobei die Zahlen die Anzahlen der zusammenhängenden Deckenmodule 32 angeben.

Beim Montieren des Deckenelements 1 bzw. der Deckenmodule 32 an den Tragleisten 11 werden die Vorbohrungen in der Trägerschicht 5 genutzt.

Beim Aufbau der Heiz-/Kühldecke 2 aus den Deckenelementen 1 bzw. den Deckenmodulen 32, der Füllplatte 28 und den Blindplatten 31 wird folgendermaßen vorgegangen. Zunächst wird die Tragstruktur 10 an der Raumdecke 6 montiert. Anschließend werden die Deckenelemente 1 bzw. die Deckenmodule 32 an der Tragstruktur 10 unter Nutzung der Vorbohrungen montiert. Die Montageelemente durchdringen neben den Vorbohrungen die Dämmtragabschnitte 9. Die Deckenelemente 1 bzw. die Deckenmodule 32 stützen sich über die Dämmtragabschnitte 9 an den Tragleisten 11 ab. Anschließend werden die Deckenelemente 1 bzw. die Deckenmodule 32 mit den Anbindungsleitungsabschnitten 12, 22 bzw. 34, 35 an den Versorgungsleitungen 27 angeschlossen. Nach durchgeführter Druckprobe werden Installationskorridore zwischen den Deckenelementen 1 bzw. zwischen Deckenelementen 1 und Deckenmodulen 32 oder zwischen Deckenmodulen 32 mit Füllelementen 28 verschlossen.

Weitere Deckenhohlräume werden mit den Blindelementen 31 verschlossen. Schließlich werden die Fugenbereiche zwischen den Deckenelementen 1, Deckenmodulen 32, Füllplatten 28 und Blindplatten 31 verspachtelt. Nun kann noch ein bekanntes Oberflächenfinish erfolgen.

Die Figuren 4A und 4B zeigen Details einer weiteren Ausführung eines Deckenelements 1 im Bereich des Kühlfluidverbindungsabschnitts 15. Komponenten, die denjenigen entsprechen, die vorstehend schon unter Bezugnahme auf die Fig. 1 bis 4 erläutert wurden, tragen die gleichen Bezugsziffern und werden nicht nochmals im Einzelnen diskutiert. Der Kühlfluidverbindungsabschnitt 15 ist bei der Ausführung nach den Fig. 4A und 4B stellvertretend für die Kühlfluidverbindungsabschnitte 15, 17, 19, 21 dargestellt. Die Ausführung des Deckenelements 1 der Figuren 4A, 4B ist im Bereich der Kühlfluidverbindungsabschnitte 17, 19, 21 genauso wie im dargestellten Bereich des Kühlfluidverbindungsabschnitts 15. Die Kühlfluidverbindungsabschnitte 15, 17, 19, 21 sind bei der Ausführung nach den Figuren 4A, 4B in eine Ω-förmige Nut 39 eingearbeitet, die die Fortsetzung der Ω-förmigen Nut der Trägerschicht 5 im Bereich der Kühlfluidverbindungsabschnitte 15, 17, 19, 21 bildet, in die das Leitungselement 4 eingelegt ist. Im Bereich der Trennposition 33 des Kühlfluidverbindungsabschnitts 15, der mit der Schnittebene der Fig. 4B zusammenfällt, hat die Nut 39 eine muldenförmige Erweiterung 40. Die Erweiterung 40 hat eine halbkugelige Kontur. Sie stellt sicher, dass der Kühlfluidverbindungsabschnitt 15 im Bereich der Trennposition 33 über ein Werkzeug oder manuell erfasst werden kann.

Nachfolgend wird die Unterteilung des Deckenelements 1 in der Ausführung nach den Figuren 4A und 4B in Deckenmodule dort beschrieben, wo sie sich von der vorstehend im Zusammenhang mit dem Deckenelement 1 nach den Figuren 1 bis 4 erläuterten Unterteilung in Deckenmodule 32 unterscheidet. Nach dem Abnehmen des in der Fig. 1 untersten Dämmtragabschnitts 9 sind die Kühlfluidverbindungsabschnitte 15, 17, 19, 21 nicht sofort zugänglich, sondern werden durch Eingriff in die Erweiterung 40 aus dem Q-Nutabschnitt 39 herausgehoben. Anschließend können die Kühlfluidverbindungsabschnitte 15, 17, 19, 21 an den Trennpositionen 33 durchtrennt werden. Das restliche Verfahren bei der Unterteilung in Deckenmodul 32 entspricht dem, was vorstehend schon erläutert wurde.

## Patentansprüche

1. Deckenelement (1) für eine Heiz-/Kühldecke (2) zum Kühlen von Räumen (3)
- mit genau einem Leitungselement (4) zur Aufnahme eines Kühlfluids,
- mit mindestens einer Trägerschicht (5), in der das Leitungselement (4) angeordnet ist,
- mit mindestens einer Dämmschicht (7) zur einseitigen, wärmedämmenden Abdeckung der Trägerschicht (5),
- wobei das Deckenelement (1) eine Mehrzahl von Kühlfluidleitungsabschnitten aufweist, die benachbarte Flächenabschnitte (14, 16, 18, 20) des Deckenelements (1) belegen, wobei benachbarte Kühlfluidleitungsabschnitte miteinander über randseitige Kühlfluidverbindungsabschnitte (15, 17, 19, 21) verbunden sind,
**dadurch gekennzeichnet, dass**
- die Kühlfluidverbindungsabschnitte (15, 17, 19, 21) so angeordnet sind, dass sie im die Kühlfluidleitungsabschnitte verbindenden Zustand nicht seitlich über das Deckenelement (1) überstehen,
- die Trägerschicht (5) im Bereich der Kühlfluidverbindungsabschnitte (15, 17, 19, 21) Aussparungen (24) aufweist, über die die Kühlfluidverbindungsabschnitte (15, 17, 19, 21) vom Rand des Deckenelements (1) her zugänglich sind.

2. Deckenelement nach Anspruch 1, **dadurch gekennzeichnet, dass** sich jeweils eine der Aussparungen (24), die einem Kühlfluidverbindungsabschnitt (15, 17, 19, 21) zugeordnet ist, über die gesamte Breite des von diesem Kühlfluidverbindungsabschnitt (15, 17, 19, 21) belegten Flächenabschnitts (14, 16, 18, 20) erstreckt, wobei bevorzugt die Aussparungen (24), gesehen von der der Dämmschicht (7) gegenüberliegenden Seite des Deckenelements (1) her, von Trägerschichtmaterial (25) abgedeckt sind.

3. Deckenelement nach Anspruch 1, **dadurch gekennzeichnet, dass** die Kühlfluidverbindungsabschnitte (15, 17, 19, 21) in oberseitig in die Trägerschicht (5) eingearbeitete Nuten (39) eingelegt sind, wobei die Nuten (39) als Aussparung jeweils eine muldenförmige Erweiterung (40) aufweisen, über die die Kühlfluidverbindungsabschnitte (15, 17, 19, 21) von der Oberseite der Trägerschicht (5) des Deckenelements (1) her, also von der der Dämmschicht (7) zugewandten Seite her, zugänglich sind.

4. Deckenelement nach einem der Ansprüche 1 bis 3, **dadurch gekennzeichnet, dass** zwischen benachbarten Aussparungen (24; 40) nicht ausgesparte Stege (26) der Trägerschicht (5) liegen.

5. Deckenelement nach einem der Ansprüche 1 bis 4, **dadurch gekennzeichnet, dass** das Leitungselement (4) mindestens einen aus der Trägerschicht (5) herausgeführten und durch die Dämmschicht (7) hindurchgeführten Anbindungsleitungsabschnitt (12, 22) zur Verbindung mit einer Versorgungsleitung (27) aufweist, wobei der Anbindungsleitungsabschnitt (12, 22) nicht seitlich über das Deckenelement (1) übersteht.

6. Deckenelement nach Anspruch 5, **dadurch gekennzeichnet, dass** die Dämmschicht (7) unterteilt ist in Dämmfüllabschnitte (8) sowie in Dämmtragabschnitte (9), über die das Deckenelemente (1) mit einer raumdeckenseitigen Tragstruktur (10) verbindbar ist, wobei mindestens ein Anbindungsleitungsabschnitt (12) durch einen der Dämmfüllabschnitte (8) hindurchgeführt ist.

7. Deckenelement nach einem der Ansprüche 1 bis 6, **dadurch gekennzeichnet, dass** das Leitungselement (4) als Kunststoffschlauch ausgeführt ist.

8. Deckenelement nach einem der Ansprüche 1 bis 7, **dadurch gekennzeichnet, dass** das Leitungselement (4) einen Innendurchmesser hat, der größer ist als 6 mm, insbesondere größer ist als 7,5 mm.

9. Heiz-/Kühldecke (2) mit mindestens einem Deckenelement (1) nach einem der Ansprüche 1 bis 8 und mit einer Tragstruktur (10) zur Verbindung des Deckenelements (1) mit einer Raumdecke (6).

10. Verfahren zur Herstellung mindestens zweier Deckenmodule (32) aus einem Deckenelement (1) nach einem der Ansprüche 1 bis 8 mit folgenden Schritten:
- Durchtrennen eines der Kühlfluidverbindungsabschnitte (15, 17, 19, 21) im Bereich der Aussparung (24),
- Auseinanderbewegen der nach dem Durchtrennen gebildeten einander zugewandten Enden (34, 35) des durchtrennten Kühlfluidverbindungsabschnitts (15, 17, 19, 21), so dass zugängliche Modulanbindungsleitungsabschnitte (34, 35) gebildet sind, und
- ein Trennbereich (37) zwischen den durch den durchtrennten Kühlfluidverbindungsabschnitt (15, 17, 19, 21) ursprünglich über das Leitungselement (4) miteinander verbundenen Flächenabschnitten (14, 16, 18, 20) frei zugänglich ist,
- Durchtrennen des Deckenelements (1) im nun frei zugänglichen Trennbereich (37).

## Claims

1. Ceiling element (1) for a heating/cooling ceiling (2) for cooling rooms (3),
- having precisely one conduit element (4) for holding a cooling fluid,
- having at least one support layer (5) in which the conduit element (4) is arranged,
- having at least one insulating layer (7) for covering the support layer (5) at one side in heat-insulating fashion,
- with the ceiling element (1) having a multiplicity of cooling fluid conduit sections which occupy adjacent surface sections (14, 16, 18, 20) of the ceiling element (1), with adjacent cooling fluid conduit sections being connected to one another by means of edge-side cooling fluid connecting sections (15, 17, 19,21),
**characterized in that**
- the cooling fluid connecting sections (15, 17, 19, 21) are arranged such that, in the state in which they connect the cooling fluid conduit sections, they do not project laterally beyond the ceiling element (1),
- the support layer (5) has, in the region of the cooling fluid connecting sections (15, 17, 19, 21), cutouts (24) via which the cooling fluid connecting sections (15, 17, 19, 21) can be accessed from the edge of the ceiling element (1).

2. Ceiling element according to Claim 1, **characterized in that** in each case one of the cutouts (24) which is assigned to a cooling fluid connecting section (15, 17, 19, 21) extends over the entire width of the surface section (14, 16, 18, 20) occupied by said cooling fluid connecting section (15, 17, 19, 21), with the cutouts (24) preferably being covered, as viewed from that side of the ceiling element (1) which is situated opposite the insulating layer (7), by support layer material (25).

3. Ceiling element according to Claim 1, **characterized in that** the cooling fluid connecting sections (15, 17, 19, 21) are laid in grooves (39) which are formed in the upper side of the support layer (5), with the grooves (39) having, as a cutout, in each case one depression-like widened portion (40) via which the cooling fluid connecting sections (15, 17, 19, 21) can be accessed from the upper side of the support layer (5) of the ceiling element (1), that is to say from the side facing towards the insulating layer (7).

4. Ceiling element according to one of Claims 1 to 3, **characterized in that** partition walls (26), which are not cut out, of the support layer (5) are situated between adjacent cutouts (24; 40).

5. Ceiling element according to one of Claims 1 to 4, **characterized in that** the conduit element (4) has at least one attachment conduit section (12, 22), which is guided out of the support layer (5) and is guided through the insulating layer (7), for connecting to a supply conduit (27), with the attachment conduit section (12, 22) not projecting laterally beyond the ceiling element (1).

6. Ceiling element according to Claim 5, **characterized in that** the insulating layer (7) is divided into insulation filling sections (8) and insulation supporting sections (9) by means of which the ceiling element (1) can be connected to a supporting structure (10) on the room ceiling, with at least one attachment conduit section (12) being guided through one of the insulation filling sections (8).

7. Ceiling element according to one of Claims 1 to 6, **characterized in that** the conduit element (4) is designed as a plastic hose.

8. Ceiling element according to one of Claims 1 to 7, **characterized in that** the conduit element (4) has an inner diameter which is greater than 6 mm, in particular greater than 7.5 mm.

9. Heating/cooling ceiling (2) having at least one ceiling element (1) according to one of Claims 1 to 8 and having a supporting structure (10) for connecting the ceiling element (1) to a room ceiling (6).

10. Method for producing at least two ceiling modules (32) from a ceiling element (1) according to one of Claims 1 to 8, having the following steps:
- severing one of the cooling fluid connecting sections (15, 17, 19, 21) in the region of the cutout (24),
- moving the mutually facing ends (34, 35), which are formed after the severance, of the severed cooling fluid connecting section (15, 17, 19, 21) apart such that accessible module attachment conduit sections (34, 35) are formed and
- a parting region (37) between the surface sections (14, 16, 18, 20), which were originally connected to one another via the conduit element (4) by the severed cooling fluid connecting section (15, 17, 19, 21), is made freely accessible,
- severing the ceiling element (1) in the now freely accessible parting region (37).

## Revendications

1. Elément de plafond (1) pour un plafond chauffant et/ou refroidissant (2) pour refroidir des pièces (3),
- avec exactement un élément de conduite (4) pour recevoir un fluide de refroidissement,
- avec au moins une couche porteuse (5) dans laquelle est disposé l'élément de conduite (4),
- avec au moins une couche d'isolation (7) pour le recouvrement unilatéral calorifuge de la couche porteuse (5),
- l'élément de plafond (1) présentant une pluralité de portions de conduite de fluide de refroidissement, qui occupent les portions de surface adjacentes (14, 16, 18, 20) de l'élément de plafond (1), des portions de conduite de fluide de refroidissement adjacentes étant connectées les unes aux autres par le biais de portions de connexion de fluide de refroidissement marginales (15, 17, 19, 21),
**caractérisé en ce que**
- les portions de connexion de fluide de refroidissement (15, 17, 19, 21) sont disposées de telle sorte qu'elles ne dépassent pas latéralement au-delà de l'élément de plafond (1) dans l'état connectant les portions de conduite de fluide de refroidissement.
- la couche porteuse (5) présente, dans la région des portions de connexion de fluide de refroidissement (15, 17, 19, 21), des évidements (24) par le biais desquels les portions de connexion de fluide de refroidissement (15, 17, 19, 21) sont accessibles depuis le bord de l'élément de plafond (1).

2. Elément de plafond selon la revendication 1, **caractérisé en ce qu'**à chaque fois l'un des évidements (24), qui est associé à une portion de connexion de fluide de refroidissement (15, 17, 19, 21), s'étend sur toute la largeur de la portion de surface (14, 16, 18, 20) occupée par cette portion de connexion de fluide de refroidissement (15, 17, 19, 21), les évidements (24), vus depuis le côté de l'élément de plafond (1) opposé à la couche d'isolation (7), étant de préférence recouverts par le matériau de la couche porteuse (25).

3. Elément de plafond selon la revendication 1, **caractérisé en ce que** les portions de connexion de fluide de refroidissement (15, 17, 19, 21) sont insérées dans des rainures (39) usinées du côté supérieur dans la couche porteuse (5), les rainures (39) présentant, en tant qu'évidement, à chaque fois un élargissement en forme de creux (40), par le biais duquel les portions de connexion de fluide de refroidissement (15, 17, 19, 21) sont accessibles depuis le côté supérieur de la couche porteuse (4) de l'élément de plafond (1), c'est-à-dire depuis le côté tourné vers la couche d'isolation (7).

4. Elément de plafond selon l'une quelconque des revendications 1 à 3, **caractérisé en ce que** qu'entre des évidements adjacents (24 ; 40) se situent des nervures non évidées (26) de la couche porteuse (5).

5. Elément de plafond selon l'une quelconque des revendications 1 à 4, **caractérisé en ce que** l'élément de conduite (4) présente au moins une portion de conduite de liaison (12, 22) guidée hors de la couche porteuse (5) et à travers la couche d'isolation (7), pour la connexion à une conduite d'alimentation (27), la portion de conduite de liaison (12, 22) ne dépassant pas latéralement au-delà de l'élément de plafond (1).

6. Elément de plafond selon la revendication 5, **caractérisé en ce que** la couche d'isolation (7) est divisée en portions de remplissage isolant (8) et en portions de support d'isolation (9) par le biais desquelles l'élément de plafond (1) peut être connecté à une structure porteuse (10) du côté du plafond de la pièce, au moins une portion de conduite de liaison (12) étant guidée à travers l'une des portions de remplissage isolant (8).

7. Elément de plafond selon l'une quelconque des revendications 1 à 6, **caractérisé en ce que** l'élément de conduite (4) est réalisé sous forme de tuyau en plastique.

8. Elément de plafond selon l'une quelconque des revendications 1 à 7, **caractérisé en ce que** l'élément de conduite (4) a un diamètre intérieur qui est supérieur à 6 mm, notamment supérieur à 7,5 mm.

9. Plafond chauffant/refroidissant (2) comprenant au moins un élément de plafond (1) selon l'une quelconque des revendications 1 à 8, et comprenant une structure porteuse (10) pour la connexion de l'élément de plafond (1) à un plafond de la pièce (6).

10. Procédé de fabrication d'au moins deux modules de plafond (32) constitués d'un élément de plafond (1) selon l'une quelconque des revendications 1 à 8, comprenant les étapes suivantes :
- séparation de l'une des portions de connexion de fluide de refroidissement (15, 17, 19, 21) dans la région de l'évidement (24),
- écartement l'une de l'autre des extrémités (34, 35) tournées l'une vers l'autre et formées après la séparation, de la portion de connexion de fluide de refroidissement séparée (15, 17, 19, 21), de sorte que des portions de conduite de liaison modulaires accessibles (34, 35) soient formées, et
- une région de séparation (37) entre les portions de surface (14, 16, 18, 20) connectées initialement l'une à l'autre par le biais de l'élément de conduite (4) par la portion de connexion de fluide de refroidissement séparée (15, 17, 19, 21) étant li brement accessible,
- séparation de l'élément de plafond (1) dans la région de séparation (37) maintenant librement accessible.
